# EUROPEAN PATENT SPECIFICATION

(11) **EP 0 554 451 B1**
(45) Date of publication and mention of the grant of the patent: **09.06.1999**
(21) Application number: 91914673.8
(22) Date of filing: 26.08.1991
(51) Int. Cl.: G21C 3/32, G21C 3/62

(54) **MANUFACTURE OF MOX FUEL FOR A THERMAL NUCLEAR REACTOR**
HERSTELLUNG VON MOX BRENNSTOFF FÜR KERNREAKTOR MIT THERMISCHEN NEUTRONEN
FABRICATION DU COMBUSTIBLE MOX POUR UN REACTEUR NUCLEAIRE A NEUTRONS THERMIQUES

(43) Date of publication of application: 11.08.1993
(73) Proprietor: KABUSHIKI KAISHA TOSHIBA, Kawasaki-shi, Kanagawa-ken 210-8572 (JP)
(72) Inventor: SEINO, Takeshi, Yokohama-shi Kanagawa 247 (JP)
(74) Representative: Lehn, Werner, Dipl.-Ing.
(86) International application number: PCT/JP91/01125
(87) International publication number: WO 93/04479

(56) References cited:
- EP-A- 0 456 969
- FR-A- 2 552 921
- JP-A- 1 197 693
- JP-A- 2 044 288
- JP-A- 63 061 990
- US-A- 3 844 886

## Description

### BACKGROUND ART

The present invention relates to manufacture of a MOX fuel rod adapted for use in a thermal neutron type reactor and also to a fuel assembly utilizing such fuel rods enriched in plutonium.

In view of effective usage of resources and energy security, there is a schedule for the utilization of plutonium recovered through reprocessing of spent fuel as fuel in a thermal neutron reactor.

Plutonium radiates α-rays having high radiation intensity and it is hence necessary to prevent a human body from being internally exposed thereto and also radiates neutrons and γ-rays through decay or spontaneous fission. For this reason, production or fabrication of fuel including plutonium should be performed in a sealed environment in comparison with uranium fuel. In addition, much consideration must be paid to equipment and manufacturing processes. For example, multiple shielding equipment is required and strict attention should be paid to its decontamination and maintenance. Accordingly, it is extremely disadvantageous in economical and other view points to manufacture many kinds of fuel pellets and fuel rods containing plutonium in different enrichments.

In another view point, since severe conditions are placed on fuel rods containing plutonium with respect to conveyance, measurement control and criticality control, it is desired to reduce the number of fuel rods containing plutonium by using a large containing ratio of plutonium in one fuel rod.

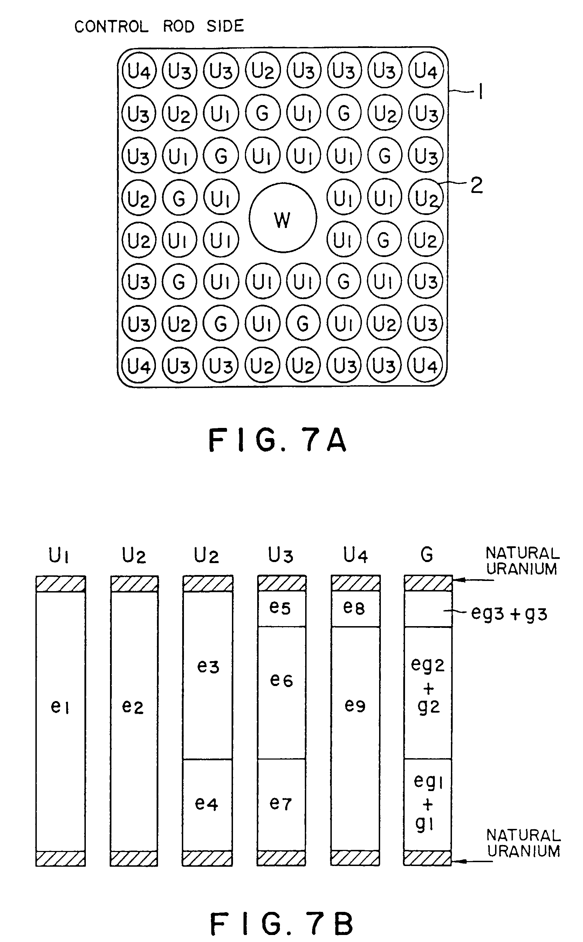

From the above view points, in a fuel assembly in which plutonium of a predetermined amount obtained through the reprocessing of spent fuel is utilized for a thermal neutron reactor, it is advantageous to substitute fuel rods each having high enrichment, in such a fuel assembly utilizing enriched uranium as shown in Fig. 7, with fuel rods containing plutonium, such as uranium-plutonium mixed-oxide fuel (MOX).

Fig. 7A shows a fuel arrangement in a radial direction and Fig. 7B shows a fuel arrangement in an axial direction. In these figures, reference numeral 1 denotes a channel box, 2 denotes a fuel rod, the symbol Uᵢ (i = 1 - 4) represents uranium fuel, G is a fuel rod containing a burnable poison and W is a water rod.

In the substitution of highly enriched uranium fuel rods in a uranium fuel rod assembly with MOX fuel rods, the enrichment of the fissionable plutonium is experimentally set such that the reactivity characteristics of the plutonium fuel assembly and the peaking coefficients in the radial and axial directions become approximately the same as those of the uranium fuel assembly, but as a result, the following relationship will be established approximately.

Namely, in the case where a fuel rod having enrichment eᵢ of the uranium fuel assembly is substituted with a MOX fuel rod having enrichment Pᵢ, supposing that the enrichment of U-235 of the uranium of the MOX fuel rod is e_{B}, the following equation (1) will be established.

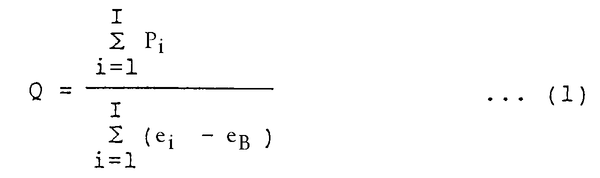

I : Number of the fuel rods to be substituted.

In this equation Q becomes 1.2 to 1.5.

In another case where a fuel rod having a high enrichment of the uranium fuel assembly is substituted with a MOX fuel rod, blanket portions having low enrichment of U-235 are arranged to upper and lower ends of the uranium fuel rod. However, in the MOX fuel rods, there is a possibility of increasing the number of MOX fuel rods when a predetermined amount of the recovered plutonium is treated as MOX fuel rods provided with blanket portions having low U-235 enrichment, this being disadvantageous in an economical view.

In a thermal neutron reactor, when it is required to mix plutonium with uranium fuel and then to cause a fission reaction, nuclides other than U-235 for causing the fission reaction with respect to thermal neutrons are plutonium isotopes Pu-239 and Pu-241. Plutonium further includes Pu-240 which absorbs thermal neutrons and minute amounts of Pu-238 and Pu-242.

The plutonium isotope Pu-241 is subject to β-decay with a relatively short half-life (14.7 years) and decays to Am-241 as a neutron absorbing nuclide. During the cooling period of the spent fuel, Pu-238 and Pu-240 are transformed by α-decay of Cm-242 and Cm-244, respectively, but the transformed amounts thereof are small and their influence on the characteristics of the MOX fuel will be neglected.

The amount of fissionable isotopes of plutonium to be enriched in a MOX to fuel rod for a thermal neutron reactor is restricted to an amount necessary for keeping a chain reaction going for a predetermined period and only the amount determined by design is mixed. Namely, U-235, Pu-239 and Pu-241 must be mixed so as to take a value designed for achieving a predetermined reactivity.

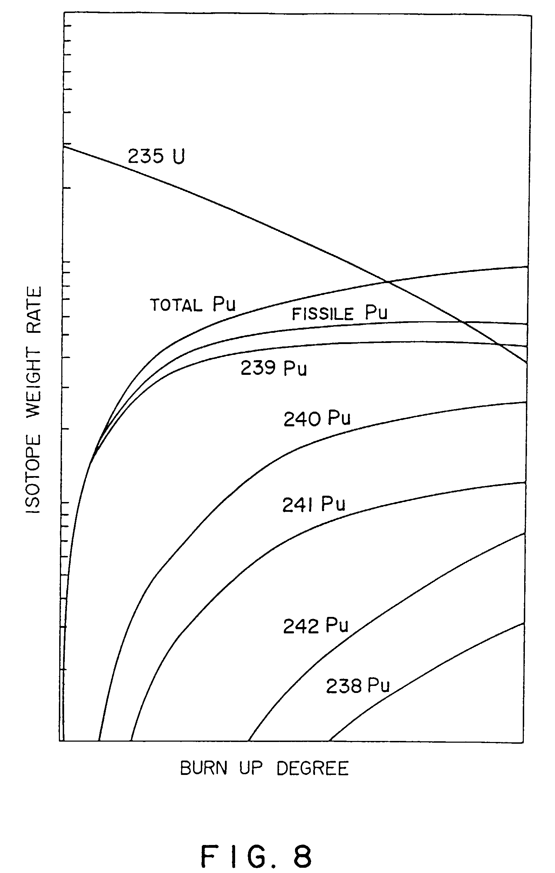

However, plutonium is recovered by the reprocessing of spent fuel and, accordingly, the isotope composition thereof differs in accordance with initial enrichment, burnup degree and cooling period of the spent fuel. Fig. 8 represents one example of the change of plutonium isotopes in the case of uranium fuel burnup.

Accordingly, plutonium recovered after reprocessing through mixing of spent fuel with plutonium is considered to have a different isotope composition from that due to a reprocessing batch.

In general, fuel design is determined so that the enrichment of the fissionable substance of the fuel rod has a predetermined reactivity before the recovery of the plutonium. However, it is complicated and disadvantageous to redesign the enrichment of the fissionable substance every time that the composition of the fissionable nuclides in the actually recovered plutonium differs, in order to maintain the predetermined reactivity.

Further, since Am-241 is removed as an impurity at the time of the recovery of the plutonium during the reprocessing of spent fuel, it is not necessary to consider the accumulation thereof during the spent fuel cooling period. However, Am-241 is accumulated in a period from the recovery of the plutonium to its loading into a core as a manufactured MOX fuel, so that it becomes necessary to design the enrichment in consideration of an influence which this will have on the core characteristics.

For the design of the enrichment of the MOX fuel, the use of a mixture of recovered plutonium is assumed as described above, but the actual mixing ratio and the amount of Pu-241 to be transformed to Am-241 through β-decay during the cooling period and during a time before its loading into the core after reprocessing, are not clear. For this reason, in the conventional technology, design has been conducted by tentatively assuming the containing rate of the sum Pu_{f} of the fissionable plutonium isotopes Pu-239 and Pu-241 contained in the recovered plutonium by considering the initial enrichment, burnup degree, cooling period, reprocessing amount, and the time period after reprocessing before loading into the core as a fuel assembly after transformation to PuO₂ and manufacturing as MOX fuel through mixing with UO₂.

That is, at a time when MOX fuel using recovered plutonium after reprocessing of spent fuel in a boiling water reactor BWR, on the assumption that plutonium would be obtained having a plutonium containing ratio F of from about 80%, which is recovered after reprocessing spent fuel having a low initial enrichment and low burnup degree such as initially loaded fuel, to about 60%, which is recovered after reprocessing spent fuel having a high initial enrichment and high burnup degree such as reloaded fuel; the larger containment rate of about 80% is sought. This is because the reactivity becomes high in the case of the high containing rate F, that is, a lesser amount of Pu-240 or Pu-242 as a thermal neutron absorbing nuclide is present, and accordingly, the margin with respect to the thermally limited value in the operational characteristics at the time of loading of the MOX fuel in the core becomes small. According to the confirmation of the margin in the design on the assumption of such a plutonium containing rate F, in actual plutonium usage, if the plutonium containing rate F could be made to be larger than the value assumed in design, the margin with respect to the thermally limited value could be made larger.

Further, with respect to the Pu-241 which decays and Am-241 which is accumulated during the time from manufacturing the recovered plutonium into MOX fuel until loading it into the core, a shorter setting such as about one year has been made in consideration of an actually usable period. This is also based on the consideration that Pu-241 is contained in a high amount in the shorter usable period and a high margin can be ensured in view of the reactivity.

As described above, in the design of MOX fuel, the enrichment should be set by preliminary assumption of the containing rate F with a certain composition in the initial design in spite of the fact that the composition of the plutonium and, in particular, the containing rate F of fissionable plutonium, to be actually obtained and used are not clear, and accordingly, in the initial design, the containing rate F should be set to a considerably large value with respect to the plutonium to be actually used.

After the MOX fuel has been designed and the margin having an optimum operational characteristic has been confirmed, the plutonium to be actually used is obtained. in a case where the containing rate F of the plutonium obtained is different from that assumed at the design time, the mixing amount of the plutonium is regulated so that the amount of fissionable nuclides ²³⁵U + ²³⁹Pu + ²⁴¹Pu are to coincide. In this method, however, the reactivity is increased or decreased largely in accordance with the increasing or decreasing of the amounts of Pu-240 and Pu-242. If the amount of Pu-240 and Pu-242 is larger than that in the design, less reaction may be performed and power may be hence reduced. From the viewpoint of ensuring the design margin, since safety is maintained in the case of less reaction rather than in the case of excessive reaction, design is conducted as a countermeasure so that such isotopes as Pu-240 have a containing rate less than the assumed plutonium composition and, if a reactivity shortage is actually caused, an amount of fuel to be exchanged is increased or the running period is made short. However, such countermeasures result in a change of the fuel amount to be required or disadvantages in economy.

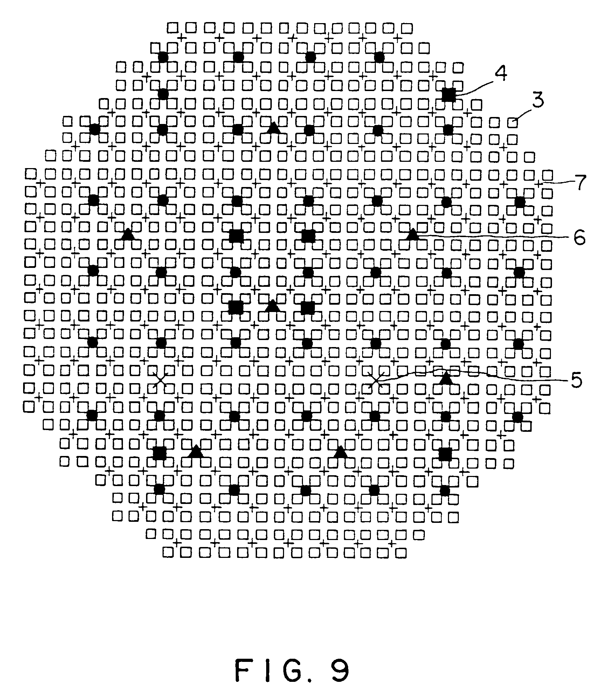

In a BWR as one example of the thermal neutron reactor, as shown in Fig. 9, a number of fuel assemblies are allocated within a channel box to constitute a core. Referring to Fig. 9, reference numerals 3, 4, 5, 6 and 7 denote a fuel assembly, a local power range monitoring system LPRM, an LRM, a source range monitoring system SRM and a control rod, respectively.

In a space between the adjacent fuel assemblies 3, there is located a water gap area, having a constant width, for arranging a cross-shaped control rod, i.e. a control blade, or instrumentation tube.

Coolant in the channel box constitutes two layer flows of water and steam during the running of the core, but in the water gap area, the coolant is not directly heated by the control rod, thus not generating steam. For this reason, the atomic density of hydrogen in the water gap area is large and the axial distribution of the thermal neutrons in the horizontal cross-section of the fuel assembly 3 of the BWR is made large in the peripheral portion of the fuel assembly. In order to make a power peaking coefficient small in an inner radial direction of the fuel assembly, it is adapted to arrange fuel rods having low enrichment to the peripheral portions of the fuel assembly as shown in Figs. 7A and 7B.

If fuel rods containing plutonium are used, in order to make a power peaking coefficient small in the radial and axial directions of the fuel assembly, it is necessary to adjust the enrichment and the distribution of the uranium fuel rods and the density and the distribution of a burnable poison as well as their arrangement in the fuel assembly.

In general, the isotope composition of plutonium recovered by reprocessing is different, as described hereinbefore, in initial enrichment, burnup hysteresis, burnup degree, cooling period, etc. of the spent fuel reprocessed. However, when MOX fuel manufactured by mixing such plutonium with uranium is irradiated by thermal neutrons in a thermal neutron reactor, the isotopes of uranium and plutonium are transformed as follows. Namely, neutrons of the uranium fuel are absorbed by U-238 in the thermal 1 neutron reactor and transformed into Pu-239. The Pu-239 is fissioned by the absorption of thermal neutrons, but a portion thereof is transformed into Pu-240, which is then transformed into Pu-241 by the absorption of neutrons. The Pu-241 is a fissionable nuclide, but a portion thereof is further transformed into Pu-242 by further absorption of neutrons. The Pu-241 is then transformed into Cm-243 by the absorption of neutrons. As a consequence of such reactions of the plutonium isotopes, the fissionable substances contained in the fuel rod are less reduced by fission, and lowering of the reactivity due to burnup of the fuel does not progress in comparison with uranium fuel. Therefore, the power peaking of a fuel rod containing plutonium in the radial direction of the fuel assembly has a tendency of being made large during burnup in comparison with a fuel rod containing uranium.

Further, since the composition of plutonium isotopes recovered after reprocessing cannot be specified, it is necessary to either not utilize a rod in a case where the composition of the plutonium actually obtained includes a larger amount than the Pu_{f} assumed in design, or to mix the recovered plutonium with plutonium containing a lesser amount of Pu_{f}. In a conventional technique, there is no clear standard for judgement with respect to the mixing ratio and compositions in such mixing of plutonium isotopes, and accordingly, such mixing has been performed case by case on the basis of empirical results.

As described above, in the conventional technology, when plutonium is mixed, there is no clear standard for judgement as to the mixing ratio and the composition to be obtained, so that the reactivity of the MOX fuel is largely different in accordance with the composition of the obtained plutonium, and scattering of the reactivity is observed in a view point of interchangeability with the uranium, thus including disadvantageous points in the limit of the power peaking in core operation and in fuel economy.

The present invention was conceived in view of the above defects and disadvantages and aims to provide a fuel assembly for a thermal neutron type reactor capable of reducing the kind and number of fuel rods containing plutonium and increasing the margin with respect to the thermal limit of the reactor during the running of the reactor.

Another object of the present invention is to provide a fuel assembly for a thermal neutron type reactor capable of easily setting the fission reaction effects of fuel rods containing plutonium and easily performing correction for keeping its operational characteristics.

A further object of the present invention is to provide a fuel assembly for a thermal neutron reactor capable of preventing an excessive increase of power peaking coefficient in the radial and axial directions of the fuel assembly containing the plutonium.

### DISCLOSURE OF THE INVENTION

Accordingly, in one aspect, the present invention provides a method of adjusting the concentration PuO₂/(PuO₂ + UO₂) of PuO₂ in a uranium and plutonium mixed oxide (MOX) fuel rod suitable for use in a thermal neutron reactor in which fuel rods containing U-235-enriched uranium oxide are bundled in a lattice arrangement, a portion of the fuel rods in said lattice arrangement including a plurality of such MOX fuel rods, wherein said fuel rod is manufactured from a batch of plutonium having, immediately after irradiation of spent fuel used to provide said batch: a containing rate Pu-240/Pu of non-fissile Pu-240 equal to C, and a sum of containing rates (Pu-239 + Pu-241)/Pu of fissionable isotopes of Pu equal to f_{c}' corresponding to C according to a relationship between the sum of the containing rates (Pu-239 + Pu-241)/Pu of fissionable isotopes of Pu in said batch, and the containing rate Pu-240/Pu of non-fissile Pu-240 in said batch which forms a monotonic curve of negative gradient on a linear graph plotting the containing rate of non-fissile Pu-240 in said batch on the abscissa thereof, and the sum of the containing rates of fissionable isotopes of Pu in said batch on the ordinate thereof, said method being characterized by adjusting the concentration PuO₂/(PuO₂ + UO₂) of PuO₂ in said fuel rod in a manufacturing stage of said fuel rod Pᵢ' to be 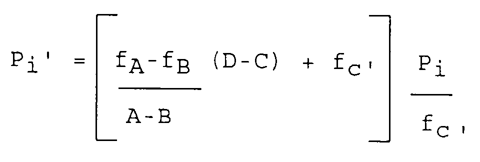 where D is the containing rate Pu-240/Pu of non-fissile Pu-240 in said batch set at a design stage of said fuel rod, A is a containing rate Pu-240/Pu of non-fissile Pu-240 less than C and D, B is a containing rate Pu-240/Pu of non-fissile Pu-240 greater than C and D, f_{A} and f_{B} are the respective sums of containing rates (Pu-239 + Pu-241)/Pu of fissionable isotopes of Pu corresponding to A and B according to said relationship, and Pᵢ is the concentration PuO₂/(PuO₂ + UO₂) of PuO₂ in said fuel rod set at a design stage of said fuel rod to produce a desired reactivity of said fuel rod, thereby ensuring that the desired reactivity of the resultant fuel rod is achieved following said manufacturing stage.

In a second aspect, the present invention provides a method of adjusting the concentration PuO₂/(PuO₂ + UO₂) of PuO₂ in a uranium and plutonium mixed oxide (MOX) fuel rod suitable for use in a thermal neutron reactor in which fuel rods containing U-235-enriched uranium oxide are bundled in a lattice arrangement, a portion of the fuel rods in said lattice arrangement including a plurality of such MOX fuel rods, wherein said fuel rod is manufactured from a batch of plutonium having immediately after irradation of spent fuel used to provide said batch: a containing rate Pu-240/Pu of non-fissile Pu-240 equal to C₁ less than D or equal to C₂ greater than D, where D is the containing rate Pu-240/Pu of non-fissile Pu-240 in said batch set at a said design stage of said fuel rod, and a sum of containing rates (Pu-239 + Pu-241)/Pu of fissionable isotopes of Pu equal to f_{C1} corresponding to C₁ or equal to f_{c2} corresponding to C₂, f_{c1} corresponding to C₁ and f_{c2} corresponding to C₂ according to a relationship between the sum of the containing rates (Pu-239 + Pu-241)/Pu of fissionable isotopes of Pu in said batch, and the containing rate Pu-240/Pu of non-fissile Pu-240 in said batch which forms a monotonic curve of negative gradient on a linear graph plotting the containing rate of non-fissile Pu-240 in said batch on the abscissa thereof, and the sum of the containing rates of fissionable isotopes of Pu in said batch on the ordinate thereof, said method being characterized by adjusting the concentration PuO₂/(PuO₂ + UO₂) of PuO₂ in said fuel rod in a manufacturing stage of said fuel rod Pᵢ' to be 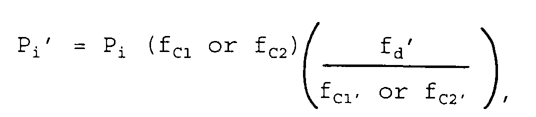 where$\frac{{\text{f}}_{\text{d'}}}{{\text{f}}_{\text{C1'}} {\text{or f}}_{\text{C2'}}} \text{≤} \frac{{\text{f}}_{\text{d}}}{{\text{f}}_{\text{C1}} {\text{or f}}_{\text{C2}}} \text{,}$ where f_{d} is the sum of the containing rates (Pu-239 + Pu-241)/Pu of fissionable isotopes of Pu corresponding to D according to said relationship, and Pᵢ is the concentration PuO₂/(PuO₂ + UO₂) of PuO₂ in said fuel rod set at said design stage of said fuel rod to produce a desired reactivity of said fuel rod, thereby ensuring that the desired reactivity of the resultant fuel rod is achieved following said manufacturing stage.

Thus, in a fuel assembly for a thermal neutron type reactor containing a MOX fuel rod manufactured by the method of the invention, the enrichment of the plutonium in the fuel rod containing the plutonium is set in accordance with the containing rate of Pu-240. The relationship between the sum Pu_{f} (Pu_{f} = ²³⁹Pu + ²⁴¹Pu) of the fissionable nuclides in plutonium isotopes immediately after the irradiation of spent fuel and the Pu-240 is represented by a simple descending curve which is substantially not dependent on the spent fuel and its burnup degree. For this reason, by utilizing this simple descending relation, the reactivity change caused by the difference in the plutonium isotope composition between design and manufacture can be easily and reasonably compensated for.

Furthermore, with respect to plutonium batches having different isotope compositions, the mixing ratio is therefore decided in accordance with the difference in the Pu-240 amount between the batches to thereby obtain the predetermined plutonium isotope composition. Accordingly, even in a case where the amount of Pu-240 assumed at the design time differs from the amount of the actually obtained Pu-240, the enrichment correction can be done by making the simple descending curve approximate a straight line.

Still furthermore, the enrichment of a fuel rod containing plutonium may thus be corrected in accordance with the composition of the plutonium, the cooling period of the spent fuel and the period until the time of mixing the plutonium and the uranium, MOX fuel manufacturing and then loading it into the core, the enrichment thus being capable of being accurately set.

The invention will be better understood by referring, by way of example, to the accompanying drawings, in which:-
Fig. 1A shows a fuel arrangement in a radial direction of a fuel assembly for a thermal neutron type reactor according to a first arrangement,
Fig. 1B shows an arrangement in the axial direction thereof, Fig. 2A is a view corresponding to that of Fig. 1A, but related to a second arrangement,
Fig. 2B is a view corresponding to that of Fig. 1B, but related to the second arrangement,
Fig. 3A is a view corresponding to that of Fig. 1A, but related to a third arrangement,
Fig. 3B is a view corresponding to that of Fig. 1B, but related to the third arrangement,
Fig. 4 is a view corresponding to that of Fig. 1A, but related to a fourth arrangement,

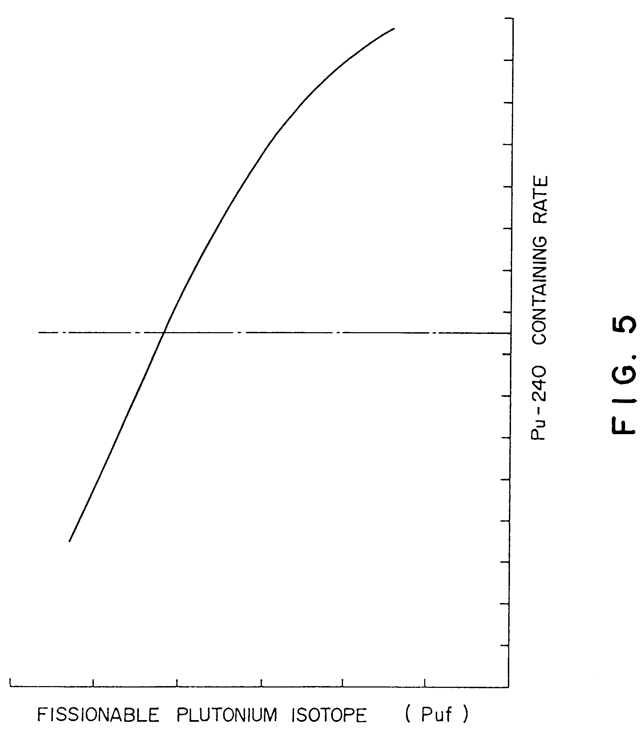

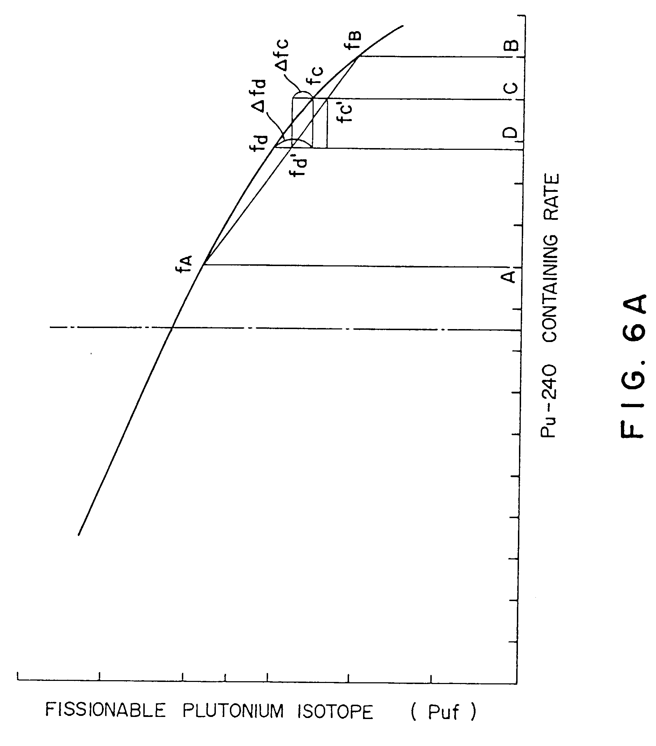

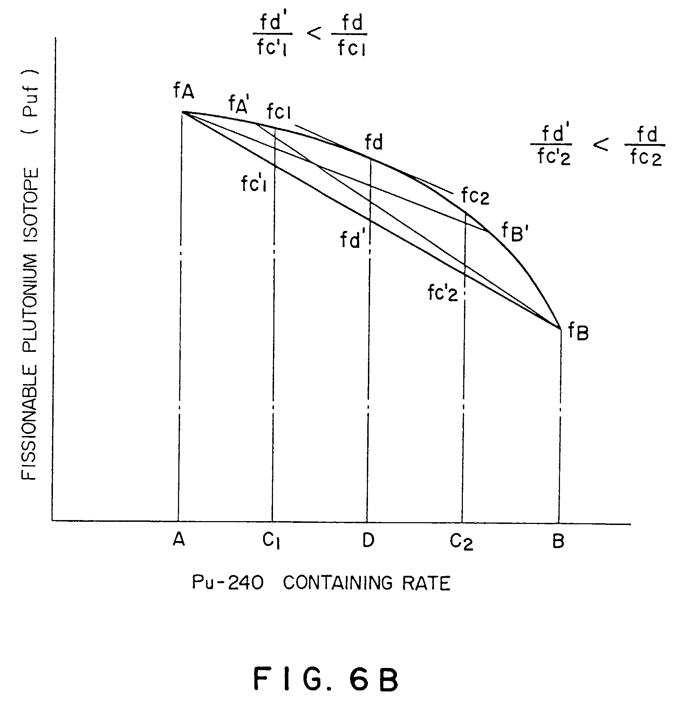

Fig. 5 is a graph showing a relationship between the plutonium isotope Pu-240 containing rate and the sum of the containing rates of the fissionable plutonium isotopes, Figs 6A and 6B are explanatory views for showing embodiments of the method of obtaining compositions of plutonium mixed in accordance with the graph of Fig. 5, Fig. 7A shows a fuel arrangement in a radial direction of a conventional fuel assembly for a thermal neutron type reactor, Fig. 7B shows an arrangement in the axial direction thereof, Fig. 8 is a graph showing one example of the plutonium composition, and Fig. 9 shows an arrangement of a fuel assembly and a control rod in a conventional BWR core.

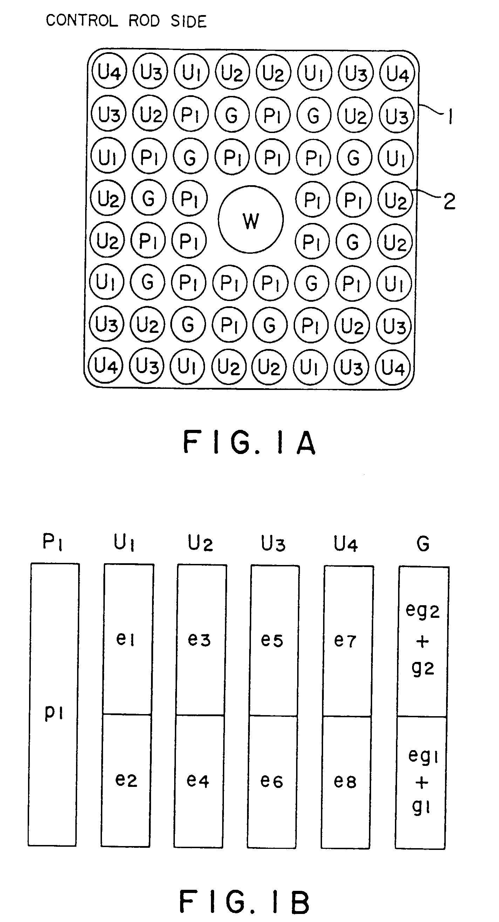

Figs. 1A and 1B represent an MOX fuel assembly for a BWR as one example of a fuel assembly for a thermal neutron type reactor, in which Fig. 1A shows a fuel arrangement in the radial direction of the fuel assembly and Fig. 1B shows a fuel arrangement in the axial direction thereof.

In Figs. 1A and 1B, reference numeral l denotes a channel box and 2 is a fuel rod, and a symbol Uᵢ (i = 1 - 4) denotes uranium fuel, P₁ is an MOX fuel containing plutonium, G is a fuel rod containing a burnable poison and W is a water rod.

In the present arrangement, the fuel assembly has a structure in which the eighteen highly enriched fuel rods disposed at the central portion of a conventional uranium fuel assembly such as shown in Figs. 7A and 7B are substituted with MOX fuel rods.

Further, the enrichments of the fissionable plutonium (Pu), U-235 and U-235 including a burnable poison, and the poison density of the fuel rod containing the burnable poison are as follows.
Enrichment of Fissionable Pu
p₁: 4.5 %
Enrichment of U-235
e₁: 4.0 %
e₂: 3.0 %
e₃: 3.8 %
e₄: 2.8 %
e₅: 3.5 %
e₆: 2.3 %
e₇: 2.6 %
e₈: 1.8 %
Enrichment of U-235 of Fuel Rod Containing Burnable Poison
eg₁: 4.1 %
eg₂: 4.9 %
Poison Density of Fuel Rod Containing Burnable Poison
g₁: 3.5 %
g₂: 4.5 %

Each of these eighteen MOX fuel rods has a structure corresponding to that of Figs. 7A and 7B in which the uranium fuel rods having enrichment higher than that of fuel rods disposed to the peripheral portion of the fuel assembly are substituted with the MOX fuel rods. The enrichment of the plutonium is made high by substituting the fuel rods disposed to the peripheral portion with the MOX fuel rods, and accordingly, the numbers of fuel pellets and fuel rods can be reduced at a time of fabricating a predetermined amount of the recovered plutonium to the MOX fuel.

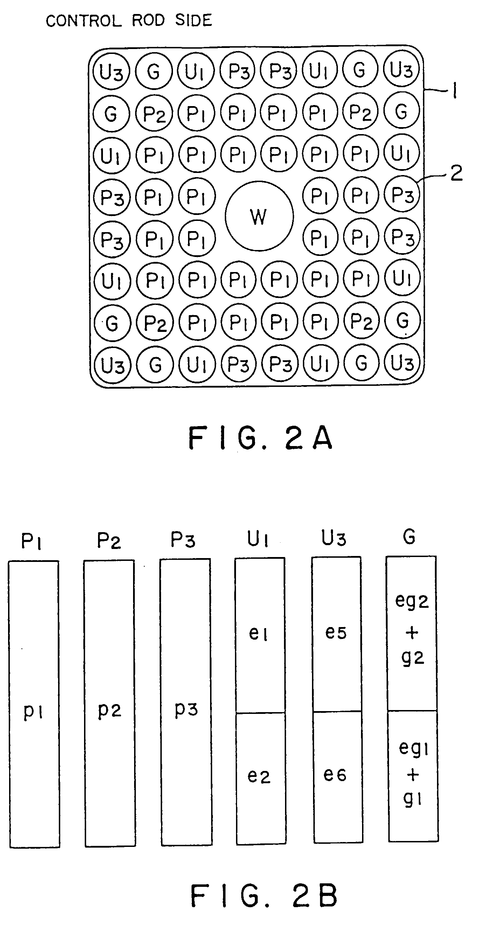

Figs. 2A and 2B represent a second arrangement, in which forty fuel rods having high enrichment disposed at the central portion of the uranium fuel assembly and a part of the peripheral portion thereof are substituted with the MOX fuel rods. In Figs. 2A and 2B, a symbol Uⱼ = (j = 1, 3) denotes a uranium fuel rod and Pᵢ (i = 1 - 3) is an MOX fuel rod containing plutonium. The enrichments of the plutonium and the uranium are as follows.
Enrichment of Fissionable Pu
P₁ : 6.2 %
P₂ : 5.0 %
P₃ : 3.6 %
Enrichment of U-235
e₁ : 4.0 %
e₂ : 3.0 %
e₃ : 3.3 %
e₄ : 2.3 %
e₅ : 2.2 %
e₆ : 1.8 %
Enrichment of U-235 of Fuel Rod Containing Burnable Poison
eg₁ : 4.1 %
eg₂ : 4.9 %
Poison Density of Fuel Rod Containing Burnable Poison
g₁ : 1.5 %
g₂ : 2.5 %

In the present arrangement, twenty uranium fuel rods not substituted with the MOX fuel rods have low enrichment less than half of the enrichment of the centrally arranged fuel rods. For this arrangement, the amount of the MOX fuel rods to be manufactured having low plutonium enrichment is reduced by substituting the fuel rods disposed to these portions with the uranium fuel rods, and accordingly, the number of MOX fuel rods manufactured from the predetermined amount of the recovered plutonium can be effectively reduced.

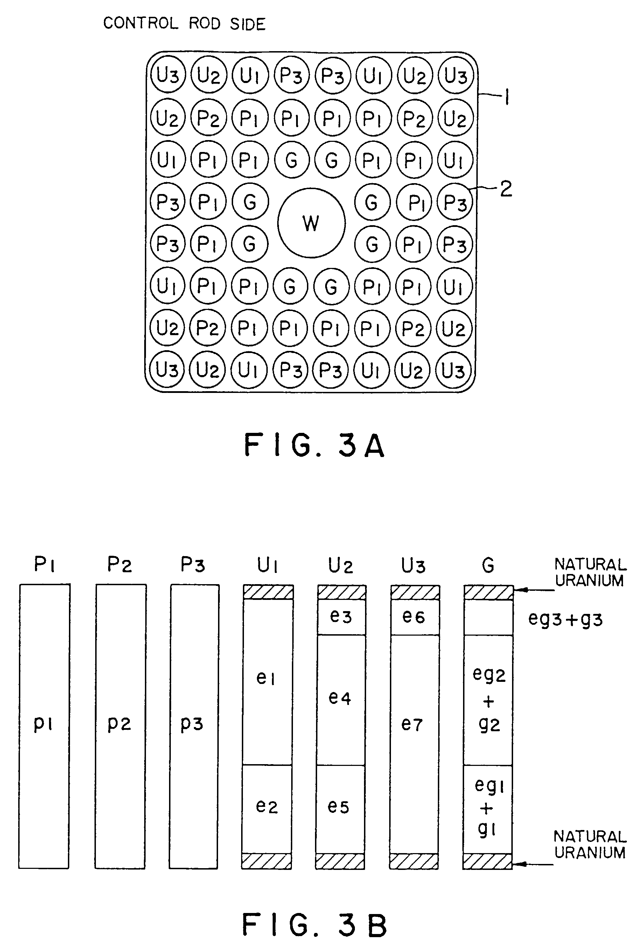

Figs. 3A and 3B represent a third arrangement, in which MOX fuel rods each having no natural uranium blanket portion at its upper and lower ends. The enrichments of the plutonium and the uranium are as follows.
Enrichment of Fissionable Pu
P₁ : 6.2 %
P₂ : 5.0 %
P₃ : 3.6 %
Enrichment of U-235
e₁: 4.2 %
e₂: 3.9 %
e₃: 3.4 %
e₄: 3.9 %
e₅ : 3.4 %
e₆ : 2.5 %
e₅ : 3.4 %
Enrichment of U-235 of Fuel Rod Containing Burnable Poison
eg₁ : 2.8 %
eg₂ : 3.0 %
eg₃ : 2.8 %
Poison Density of Fuel Rod Containing Burnable Poison
g₁: 3.5 %
g₂: 4.5 %
g₃: 2.5 %

In the present arrangement, the natural uranium blanket portion is not provided for the MOX fuel rod, so that the number of the MOX fuel rods manufactured from the predetermined amount of recovered plutonium can be prevented from increasing. Furthermore, since the blanket portion is constructed to be an effective portion for heat generation as fuel portion, the maximum linear power density can be lowered and the margin to the thermal limit during core running period can thus be increased.

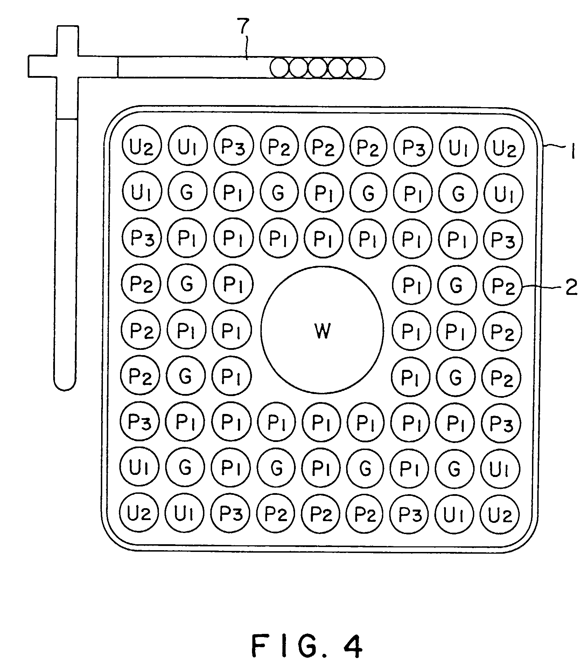

Fig. 4 represents a fourth arrangement adapted for a fuel assembly including fuel rods in 9-row and 9-line arrangement (9 x 9 fuels).

In this arrangement, the enrichments of the plutonium and the uranium are as follows.
Enrichment of Fissionable Pu
P₁: 6.2 %
P₂ : 5.0 %
P₃ : 3.6 %
Enrichment of U-235
U₁: 3.5 %
U₂: 2.8 %
U₃: 2.0 %
Enrichment of U-235 of Fuel Rod Containing Burnable Poison
upper portion: 4.9 %
lower portion: 4.1 %
eg₃: 2.8 %
Poison Density of Fuel Rod Containing Burnable Poison
upper portion: 2.5 %
lower portion: 1.5 %

In the above respective arangements, the alteration of the composition of the plutonium isotopes during irradiation in a thermal reactor is mainly carried out through the following chain reaction by the absorption of neutrons. $\text{U-238 → Pu-239 → Pu-240 → Pu-241 → Pu-242}$

A portion of each of Pu-239 and Pu-241 is burned up through the fission.

The following equation shows a sum of the fissionable nuclides in the plutonium isotope immediately after the irradiation of the spent fuel.${\text{Pu}}_{\text{f}} {\text{=}}^{\text{239}} {\text{Pu +}}^{\text{241}} \text{Pu}$

The relationship between this and Pu-240 is represented in Fig. 5.

That is, the relationship between the Pu-240 containing rate and the Pu_{f} containing rate is represented by a simple descending curve substantially not dependent on the spent fuel and its burnup degree. Accordingly, the amounts of the plutonium isotopes after mixing can be obtained from the amount of Pu-240 and the mixing ratio, even if the plutonium has a composition different from that due to the reprocessing batch, by applying this simple descending curve to an approximation of a straight line.

According to the present invention, the setting of the composition of the recovered plutonium after the mixing can be easily and reasonably made by utilizing the simple descending relationship between the Pu-240 containing rate and the Pu_{f} containing rate.

If the composition of the recovered plutonium isotopes is different from the composition tentatively assumed at the time of MOX fuel design, the reactivity change caused by the difference in the plutonium isotope composition of the MOX fuel can be easily and reasonably compensated for by utilizing that simple descending relationship.

Now, suppose that the simple descending curve of Pu_{f} at the containing rate of Pu-240 of the composition of the recovered plutonium isotopes set at the time of MOX fuel design crosses with a straight line having the same inclination as that of a tangential line on that simple descending curve at points f_{A} and f_{B} as shown in Fig. 6A, in which, however, the intersections f_{A} and f_{B} of the curve and the straight line are set so that the Pu-240 composition of the plutonium obtained by reprocessing the spent fuel and recovering the same is in a range from the Pu-240 containing rate A at the point f_{A} and the Pu-240 containing rate B at the point f_{B}. Pu-240 of the mixture of plutonium A and plutonium B has a containing rate at point C in Fig. 6A, at which the weighted average is made with the respective weights, and Pu_{f} is positioned on a point f_{c}, corresponding to the point C, on the line connecting the points f_{A} and f_{B}. Accordingly, by mixing the plutonium so that the amount C of + Pu-240 coincides with the amount D of + Pu-240 of the composition of the plutonium isotopes assumed at the MOX fuel design time, the amount f_{c'} of Pu_{f} at that time is only slightly lower than the amount f_{d'} assumed at the design time, and hence, characteristics in reactivity of the MOX fuel assembly are substantially not changed from evaluation at the design time or, even if changed, only a slight increase of the operational margin will be caused.

Further, at the time of the MOX fuel assembly design, there is a tendency of often setting the amount of Pu_{f} to a relatively smaller value for the reason that the composition of the plutonium isotopes actually recovered is not clear. In such a case, the amount C of Pu-240 of the actually obtained plutonium becomes larger than the amount D of Pu-240 tentatively set at the design time, and accordingly, the reactivity characteristics in the reactivity of the MOX fuel assembly become smaller than those of the design time by an amount corresponding to Δf_{d} as shown in Fig. 6A. This is disadvantageous for the reactivity characteristics of the MOX fuel assembly. In order to make equivalent in the reactivity the plutonium of such composition to the MOX fuel utilizing the plutonium having the composition at the design time, the design value of the enrichment of the plutonium of the MOX fuel will be corrected to make the same high, whereby the amount of the MOX fuel to be manufactured can be reduced, thus being advantageous in fuel economy.

Furthermore, according to the present invention, the reactivity change due to the difference between the amount of Pu-240 actually obtained and the amount of Pu-240 assumed at the design time can be compensated for by a reasonable method.

That is, now supposing that the Pu-240 amount of the obtained plutonium, with respect to the enrichment Pi of the MOX fuel rod, has the value of C in spite of the design with the Pu-240 amount of D of the composition of the plutonium isotope. In such a case, the amount of the Puf is less by the amount of f_{d} - f_{c} = Δf_{d}, and an amount larger by C - D of Pu-240, this being the neutron absorbing nuclide from the assumed amount D at the design time, is mixed with the MOX fuel rod having an enrichment Pᵢ. However, according to the present invention, in which the enrichment Pᵢ could be corrected as shown in the following equation in accordance with the difference of the Pu-240 amounts by making approximate, to the straight line as described hereinbefore, the fissionable substances of the composition of the plutonium isotopes with amounts C and D of Pu-240. That is, the correction amount is expressed as, by using the symbols in Fig. 6A,${\text{{(f}}_{\text{A}} {\text{- f}}_{\text{B}} {\text{)/(A - B)·(D - C) + f}}_{\text{c'}} {\text{} x P}}_{\text{i}} {\text{/f}}_{\text{c'}} {\text{= f}}_{\text{d'}} {\text{/f}}_{\text{c'}} {\text{x P}}_{\text{i}}$

Thus, the enrichment Pᵢ is multiplied by f_{d'}/f_{c'} times.

According to this correction, the Pu_{f} ratio of the actually obtained plutonium becomes f_{c} + Δf_{c} = f_{d}', slightly smaller than the Pu_{f} ratio of the plutonium at the design time. Therefore, the Pu_{f} ratio becomes substantially equivalent to that at the design time from the view point of the reactivity, and from the view point of the operational margin, the margin does not unnecessarily increase, thus providing a reasonable correction amount according to the present invention. Further, if the Pu-240 amount of the obtained plutonium differs from that of the plutonium set at the design time, the inclination of the above-mentioned straight line can be made as shown in Fig. 6B in a manner such that the inclination has a range more than an inclination of the tangential line to the above-mentioned curve when the Pu-240 containing rate of the recovered plutonium is less than that set tentatively at the design time and such that the inclination has a value less than that of the inclination of the tangential line when the Pu-240 containing rate of the recovered plutonium is larger than that set tentatively at the design time.

Namely, when the Pu-240 containing rate of the obtained plutonium is C₁ which is smaller than the Pu-240 containing rate D set tentatively at the design time, f_{c'₁} at the value of C₁ of the line F_{A'} - f_{B} having an inclination less than the inclination of the above-mentioned tangential line at the point f_{d} and f_{d'} at the value of D have a relationship $\frac{{\text{f}}_{\text{d'}}}{\text{f} {\text{}}_{{\text{c'}}_{\text{1}}}}$ ≤ $\frac{{\text{f}}_{\text{d}}}{\text{f} {\text{}}_{{\text{c}}_{\text{1}}}}$ . Accordingly, the correction amount can be made small and hence an excessive correction will be avoided by multiplying Pᵢ by f_{d'₁}/f_{c'₁} times rather than f_{d}/f_{c₁} times. In a case where the containing rate of Pu-240 of the obtained plutonium has a value C₂ which is larger than the value D, f_{c'₂} at the rate C₂ and f_{d'} at the rate D of the line f_{A} - f_{B'} having an inclination not exceeding the inclination of the tangential line at f_{d} has a relationship $\frac{{\text{f}}_{\text{d'}}}{\text{f} {\text{}}_{{\text{c'}}_{\text{2}}}}$ ≤ $\frac{{\text{f}}_{\text{d}}}{\text{f} {\text{}}_{{\text{c}}_{\text{2}}}}$, an excessive correction can be obviated by multiplying Pᵢ by f_{d'}/f_{c'₂} times rather than f_{d}/f_{c₂} times.

Further, supposing that the amount of Pu-241 at a time just after discharge of the spent fuel ²⁴¹Pu_{tₒ} the amount of Pu-241 at this time and the amount ²⁴¹Pu_{tₒ+Δt} after a cooling period of (to + Δt) are expressed as follows.${\text{}}^{\text{241}} \text{Pu} {\text{}}_{{\text{t}}_{\text{o}} \text{+Δt}} {\text{=}}^{\text{241}} \text{Pu} {\text{}}_{{\text{t}}_{\text{o}}} {\text{(1-e}}^{\text{-λΔt}} \text{)}$ λ = 0.693/T_{1/2} T_{1/2}: half life (14.7 year)

According to the present invention, the reduction of the Pu amount from the above equation forms a method of correcting the reactivity loss due to Pu-241 decay, thereby easily setting the reactivity effects of the MOX fuel by reasonably carrying out the enrichment design of the MOX fuel.

Namely, for the relation of the Pu_{f} with respect to the aforementioned Pu-240, the simple descending curve is established without consider of the cooling period, so that, when the enrichment of the MOX fuel is to be set, the enrichment can be made high so as to compensate for the reduced amount during the cooling period of the Pu-241 amount from the fissionable Pu ratio Pu_{f} of the obtained plutonium in view of the above relation.

Further, in a case where the recovered plutonium after reprocessing is treated with an oxide, Am-241 produced through β-decay of the Pu-241 is accumulated. The Am-241 absorbs neutrons and a portion thereof is transformed to fissionable Am-242, so that the reactivity is recovered to some extent during the irradiation by thermal neutron in the thermal reactor.

An amount A_{t₁} of the Am-241 at time Δt₁ after reprocessing will be expressed as follows on the assumption that the Pu-241 amount after reprocessing is ²⁴¹Pu (t1 = 0).$\text{A} {\text{}}_{{\text{t}}_{\text{1}}} {\text{=}}^{\text{241}} \text{Pu (t1 = 0)·(1-e} {\text{}}^{{\text{-λΔt}}_{\text{1}}} \text{)}$

According to the present invention, as a method of correcting the reactivity loss due to the accumulation of Am-241, an accumulated amount of Am-241 is calculated from the above equation and the setting of the enrichment of the MOX fuel can be reasonably performed. Namely, at the setting of the enrichment of the MOX fuel, the accumulated amount of Am-241 is assumed from the above equation with respect to a period between the assumed manufacturing of the MOX fuel and its loading into a score, to thereby make the enrichment high so as to correct for the reactivity loss effect.

Furthermore, in a fuel assembly in which conventional enriched uranium is used, when a portion of the fuel rods using enriched uranium is substituted with MOX fuel rods, the following procedure will be carried out at the time of setting the enrichment of the MOX fuel rods in order to prevent an excessive increase in the power peaking coefficient in the radial and axial directions of the MOX fuel assembly caused by the difference with respect to the reduced amount of fissionable substances in the uranium fuel rod due to the production of fissionable substances by nuclear transformation during the irradiation of the plutonium in the MOX fuel rod.

That is, in the conventional technology, as mentioned above, when uranium fuel rods having an enrichment eᵢ are substituted with MOX fuel rods, the enrichment Pᵢ of the fissionable substances was expressed as follows.

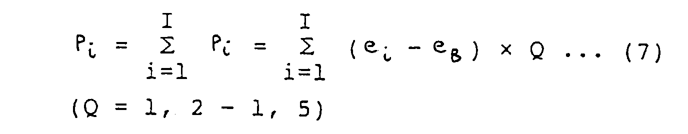

However, the power peaking coefficient of the MOX fuel rods in the MOX fuel assembly can be relatively lowered with respect to that of the uranium fuel rod1. In the above equation, symbol e_{B} represents a density of U-235 in a MOX fuel rod and I represents the number of the fuel rods.

Still furthermore, in order to prevent excessive increase of the axial power peaking coefficient of the MOX fuel assembly, provision is made in related to the enrichment distribution or the density distribution of the burnable poison in the axial direction of the uranium fuel rods or fuel rods containing the burnable poison in the MOX fuel assembly.

Namely, in the conventional uranium fuel assembly, the enrichment distributions in the axial direction are provided for a number of fuel rods. Accordingly, if these fuel rods are substituted with MOX fuel rods, the arrangement of the enrichment distributions of the fissionable plutonium results in an increase of the number of kinds of MOX fuels. However, the enrichment distribution or the density distribution of the uranium fuel rods or fuel rods containing burnable poison, which are not substituted with MOX fuel rods, are arranged to thereby constitute the MOX fuel assembly and the excessive increase of the power peaking coefficient in the axial direction can be prevented.

Further, in the above-mentioned fuel assembly, a MOX fuel manufacturing line can be reduced by using uranium fuel without plutonium, thus reducing the manufacturing cost.

Furthermore, fuel containing plutonium and fuel containing no plutonium can be commonly used as the fuel rods containing the burnable poison. From the view point of reducing the manufacturing cost of the plutonium fuel, it is advantageous to use uranium fuel as the base. Thus, the plutonium loading amount is reduced per one fuel assembly, and accordingly, in a case where a large loading amount of plutonium is heavily weighed, the burnable poison will be mixed into fuel containing plutonium.

The axial distribution of the fissionable substances (enrichment) or burnable poison amount for the fuel of a BWR are thus achieved by providing fuel rods containing plutonium and uranium fuel rods containing the burnable poison.

Hereinbelow, the enrichment of the plutonium of the MOX fuel will be described.

Since a containing rate F of a fissionable isotope Pu_{f} of plutonium is not clear at the design time of the MOX fuel assembly, there is an assumed amount of plutonium recovered by reprocessing uranium fuel having a relatively low initial enrichment and a small discharge burnup degree, in which the ratios of the respective Pu-239, Pu-240 and Pu-241 with respect to the entire plutonium are 67%, 22% and 9%, that is, F = 76(%), are assumed. Although the term Δt_{c} from when the uranium fuel is discharged to when it is reprocessed and the term Δt₁ from reprocessing and manufacturing are also not clear, these terms are assumed as Δt_{c} = 2 (years) and Δt₁ = 1 (year) from the examples of past experience. As described above, these distributions including uranium and the plutonium enrichment in the present invention are designed to satisfy the thermal limit on operational characteristics at the core loading time.

An embodiment of the present invention at a time when the plutonium is actually obtained after completion of the above design will be explained hereunder.

The actually recovered plutonium includes (i) plutonium reprocessed by reprocessing an initially discharged uranium fuel after a cooling period of 4 years therefrom and having the composition of isotope immediately after its discharge thereof in which the ratios of Pu-239, Pu-240 and Pu-241 with respect to the entire plutoniums are 71%, 20% and 9%, respectively, and includes (ii) plutonium reprocessed by reprocessing a substituted uranium fuel after the cooling period of 4 years therefrom and having the composition of isotope immediately after the discharge thereof in which the ratios of Pu-239, Pu-240 and Pu-241 with respect to the entire plutonium are 47%, 30% and 13%, respectively. The ratio in amounts thereof is determined to be 1 : 2. As this result, the average Pu_{f} is calculated as follows.$\frac{\text{80 × 1 + 60 × 2}}{\text{3}} \text{≃ 67 (%)}$

In use of such plutonium, when the present invention is applied to the enrichment of MOX fuel of the present embodiment, the following correction will have to be adapted as shown in Fig. 6A.$\text{{} \frac{\text{80-60}}{\text{20-30}} \text{(22-26)+67} ×} \frac{{\text{P}}_{\text{i}}}{\text{67}} \text{=} \frac{\text{75}}{\text{67}} {\text{P}}_{\text{i}} {\text{≐ 1.1 × P}}_{\text{i}}$

Namely, in order to manufacture each of the MOX fuel arrangements shown in Figs. 1 to 4 with the actually obtained plutonium as fuel maintaining the operational characteristics of the design time, it is necessary to make the enrichment Pᵢ of the fissionable plutonium 1.1 times the enrichment shown in each of the arrangements.

Further, in the above embodiment, there is described a case where the ratio of the obtained plutonium is given, but according to the present invention, the mixing ratio for obtaining plutonium of Pu_{f} = 76% as shown in the embodiment can be easily obtained. That is, supposing that the mixing ratio of the above two kinds of plutonium is Pₓ, then the value of Pₓ is given as follows.${\text{80P}}_{\text{x}} {\text{+ 60(1-P}}_{\text{x}} {\text{) = 76, i.e. P}}_{\text{x}} \text{=} \frac{\text{4}}{\text{5}}$

Next, in the design of the embodiment, Δt_{c} = 2 (years) and Δt₁ = 1 (year) are supposed, but with respect to spent fuel due to actually obtained plutonium, it is supposed that Δt_{c} = 4 (years) and the time until loading of the fuel into the core after reprocessing is Δt₁ = 2 (years). The containing rate of Pu-241 at the core loading time is assumed at the design time to be about 10.0% reduced by an amount of 1.7% from 11.7% at the time of Δt_{c} = 0, but in practice, the Pu-241 containing rate reduced by an amount expressed by the following equation.${\text{}}^{\text{241}} {\text{Pu(t}}_{\text{c}} {\text{=0)e}}^{\text{-λt}} \text{= e} \frac{\text{-0.693×6}}{{\text{T}}_{\text{1/2}}} {\text{= 0.72 ×}}^{\text{241}} {\text{Pu(t}}_{\text{c}} \text{=0)}$

Accordingly, since the actually obtained plutonium includes Pu-241 reduced by about 3% in amount in comparison with the fissionable plutonium shown in the arangement, the value Pu_{f} is reduced to 64%, and for this reason, it is necessary to correct the Pᵢ by 1.05 times

Next, in the embodiment, 1 year is assumed at the design stage for the term Δt₁ until loading into a core after reprocessing, but a modified embodiment corrected by the present invention in consideration of the fact that this term becomes 2 years due to the actual MOX fuel manufacturing time. In the embodiment, design is conducted in consideration of the accumulation of Am-241 due to Δt₁ = 1 (year), but the Am-241 at this time is expressed by the following equation, in which Pu-241 is shown as ²⁴¹Pu (t₁ = 0).${\text{}}^{\text{241}} {\text{Pu(t}}_{\text{1}} \text{=0)·(1 - e} \frac{\text{-1×0.693}}{{\text{T}}_{\text{1/2}}} \text{)}$

In the case after Δt₁ = 2 (years), Am-241 is increased by,${\text{}}^{\text{241}} {\text{Pu(t}}_{\text{1}} \text{=0)(e} \frac{\text{-1×0.693}}{{\text{T}}_{\text{1/2}}} \text{-e} \frac{\text{-2×0.693}}{{\text{T}}_{\text{1/2}}} \text{)}$

Now, supposing qm (Δk/k/Am-241) represents the reactivity effect at unit amount of Am-241, then the reactivity reduction amount is expressed as,${\text{qm·}}^{\text{241}} {\text{Pu(t}}_{\text{1}} \text{=0)(e} \frac{\text{-1×0.693}}{{\text{T}}_{\text{1/2}}} \text{-e} \frac{\text{-2×0.693}}{{\text{T}}_{\text{1/2}}} \text{)}$

Then, supposing qn (Δk/k/Pu_{f}) represents the reactivity effect at unit amount of Pu_{f}, then the Pu_{f} will be increased by the following amount.${\text{f}}_{\text{Am}} \text{=} \frac{{\text{qm·}}^{\text{241}} {\text{Pu(t}}_{\text{1}} \text{=0)·(e} \frac{\text{-1×0.693}}{{\text{T}}_{\text{1/2}}} \text{-e} \frac{\text{-2×0.693}}{{\text{T}}_{\text{1/2}}} \text{)}}{\text{qn}} \text{= 0.042·} \frac{\text{qm}}{\text{qn}} {\text{·}}^{\text{241}} {\text{Pu(t}}_{\text{1}} \text{=0)}$

As described hereinbefore, the new enrichment P_{i'} as a function of the enrichment Pᵢ of the fissionable plutonium at the design time is expressed as,${\text{1.1 x 1.05 x f}}_{\text{Am}} {\text{x P}}_{\text{i}}$ in consideration of the composition of the actually obtained plutonium, the cooling period of the spent fuel and the difference between the term until loading the fuel into a core after reprocessing and the term assumed at the design time.

As described hereinbefore, since fuel rods containing plutonium are not provided with uranium fuel portions and uranium blanket portions, the number of fuel rods manufactured from a predetermined amount of plutonium can be reduced, and the effective heat generating length of fuel rods containing plutonium can be increased, thereby increasing the thermal margin to the thermal limit value at the time of running a reactor running due to the lowering of the maximum linear power density.

Further, since according to the invention, the enrichment of the plutonium of a fuel rod containing plutonium is set in accordance with the containing rate of the plutonium isotope Pu-240, the reactivity change caused by the differences of the composition of the plutonium isotopes can be easily and reasonably compensated for.

Furthermore, since a predetermined composition of the plutonium isotopes is obtained by deciding the mixing ratio in accordance with the difference in the Pu-240 amount with respect to plutonium having different isotope compositions, the enrichment can be easily corrected even if the amount of Pu-240 assumed at the design time differs from the amount actually obtained.

Still furthermore, since the enrichment of a fuel rod containing plutonium can be corrected in accordance with the composition of the plutonium, the cooling period of spent fuel and the period until the plutonium and the uranium are mixed, fabricated and then loaded into the core of a reactor after reprocessing, more accurate setting of the enrichment can be done.

Still furthermore, the enrichment of a fuel rod containing plutonium can be set in accordance with a predetermined equation containing the enrichment of the uranium fuel, so that the power peaking coefficient of a fuel rod containing plutonium can be relatively lowered with respect to that of a uranium fuel rod.

## Claims

1. A method of adjusting the concentration PuO₂/(PuO₂ + UO₂) of PuO₂ in a uranium and plutonium mixed oxide (MOX) fuel rod suitable for use in a thermal neutron reactor in which fuel rods containing U-235-enriched uranium oxide are bundled in a lattice arrangement, a portion of the fuel rods in said lattice arrangement including a plurality of such MOX fuel rods, wherein said fuel rod is manufactured from a batch of plutonium having, immediately after irradiation of spent fuel used to provide said batch:
a containing rate Pu-240/Pu of non-fissile Pu-240 equal to C, and
a sum of containing rates (Pu-239 + Pu-241)/Pu of fissionable isotopes of Pu equal to f_{c}' corresponding to C according to a relationship between
the sum of the containing rates (Pu-239 + Pu-241)/Pu of fissionable isotopes of Pu in said batch, and
the containing rate Pu-240/Pu of non-fissile Pu-240 in said batch
which forms a monotonic curve of negative gradient on a linear graph plotting
the containing rate of non-fissile Pu-240 in said batch on the abscissa thereof, and
the sum of the containing rates of fissionable isotopes of Pu in said batch on the ordinate thereof,
said method being characterized by adjusting the concentration PuO₂/(PuO₂ + UO₂) of PuO₂ in said fuel rod in a manufacturing stage of said fuel rod Pᵢ' to be 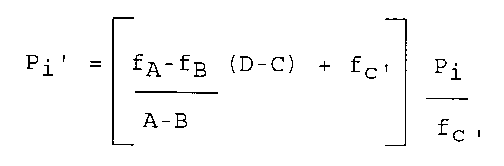 where D is the containing rate Pu-240/Pu of non-fissile Pu-240 in said batch set at a design stage of said fuel rod, A is a containing rate Pu-240/Pu of non-fissile Pu-240 less than C and D, B is a containing rate Pu-240/Pu of non-fissile Pu-240 greater than C and D, f_{A} and f_{B} are the respective sums of containing rates (Pu-239 + Pu-241)/Pu of fissionable isotopes of Pu corresponding to A and B according to said relationship, and P₂ is the concentration PuO₂/(PuO₂ + UO₂) of PuO₂ in said fuel rod set at a design stage of said fuel rod to produce a desired reactivity of said fuel rod,
thereby ensuring that the desired reactivity of the resultant fuel rod is achieved following said manufacturing stage.

2. A method of adjusting the concentration PuO₂/(PuO₂ + UO₂) of PuO₂ in a uranium and plutonium mixed oxide (MOX) fuel rod suitable for use in a thermal neutron reactor in which fuel rods containing U-235-enriched uranium oxide are bundled in a lattice arrangement, a portion of the fuel rods in said lattice arrangement including a plurality of such MOX fuel rods, wherein said fuel rod is manufactured from a batch of plutonium having immediately after irradation of spent fuel used to provide said batch:
a containing rate Pu-240/Pu of non-fissile Pu-240 equal to C₁ less than D or equal to C₂ greater than D, where D is the containing rate Pu-240/Pu of non-fissile Pu-240 in said batch set at a said design stage of said fuel rod, and
a sum of containing rates (Pu-239 + Pu-241)/Pu of fissionable isotopes of Pu equal to f_{C1} corresponding to C₁ or equal to f_{c2} corresponding to C₂, f_{c1} corresponding to c₁ and f_{c2} corresponding to C₂ according to a relationship between
the sum of the containing rates (Pu-239 + Pu-241)/Pu of fissionable isotopes of Pu in said batch, and
the containing rate Pu-240/Pu of non-fissile Pu-240 in said batch
which forms a monotonic curve of negative gradient on a linear graph plotting
the containing rate of non-fissile Pu-240 in said batch on the abscissa thereof, and
the sum of the containing rates of fissionable isotopes of Pu in said batch on the ordinate thereof,
said method being characterized by adjusting the concentration PuO₂/(PuO₂ + UO₂) of PuO₂ in said fuel rod in a manufacturing stage of said fuel rod Pᵢ' to be 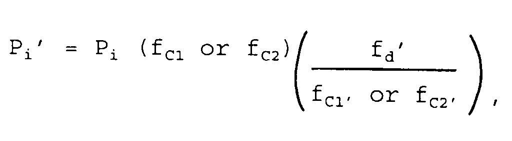 where$\frac{{\text{f}}_{\text{d'}}}{{\text{f}}_{\text{C1'}} {\text{or f}}_{\text{C2'}}} \text{≤} \frac{{\text{f}}_{\text{d}}}{{\text{f}}_{\text{C1}} {\text{or f}}_{\text{C2}}} \text{,}$ where f_{d} is the sum of the containing rates (Pu-239 + Pu-241)/Pu of fissionable isotopes of Pu corresponding to D according to said relationship, and Pᵢ is the concentration PuO₂/(PuO₂ + UO₂) of PuO₂ in said fuel rod set at said design stage of said fuel rod to produce a desired reactivity of said fuel rod,
thereby ensuring that the desired reactivity of the resultant fuel rod is achieved following said manufacturing stage.

3. A method of adjusting the concentration PuO₂/(PuO₂ + UO₂) of PuO₂ in a uranium and plutonium mixed oxide (MOX) fuel rod according to Claim 1 or Claim 2, wherein said batch of plutonium is obtained by mixing a first batch of plutonium Pₓ having isotope containing rates (Pu-239)ₓ : (Pu-240)ₓ : (Pu-241)ₓ and a second batch of plutonium P_{y} having isotope containing rates (Pu-239)_{y} : (Pu-240)_{y} : (Pu-241)_{y}, and wherein the mixing ratio Pₓ : (1-Pₓ) of Pₓ and P_{y} respectively to obtain said batch of plutonium is given by${\text{[(Pu-239)}}_{\text{x}} {\text{+ (Pu-241)}}_{\text{x}} {\text{] P}}_{\text{x}} \text{+} {\text{[(Pu-239)}}_{\text{y}} {\text{+ (Pu-241)}}_{\text{y}} {\text{] (1-P}}_{\text{x}} {\text{) = (Pu-239)}}_{\text{d}} {\text{+ (Pu-241)}}_{\text{d}} \text{,}$ where (Pu-239)_{d} and (Pu-241)_{d} are the containing rates of the fissionable isotopes of Pu in said batch set at said design stage.

4. A method of adjusting the concentration PuO₂/(PuO₂ + UO₂) of PuO₂ in a uranium and plutonium mixed oxide (MOX) fuel rod according to any one of Claims 1 to 3, wherein said adjusting of the concentration PuO₂/(PuO₂ + UO₂) of PuO₂ in said fuel rod in said manufacturing stage is conducted to compensate for decay of Pu-241 during a cooling period Δt_{c} of said batch of plutonium used to manufacture said fuel rod according to the equation:${\text{}}^{\text{241}} \text{Pu} {\text{}}_{{\text{t}}_{\text{o}} \text{+Δt}} {\text{=}}^{\text{241}} \text{Pu} {\text{}}_{{\text{t}}_{\text{o}}} {\text{(1-e}}^{\text{-λΔt}} \text{)}$ where λ = 0.693/T_{1/2} and T_{1/2} is the half-life of Pu-241,${\text{}}^{\text{241}} \text{Pu} {\text{}}_{{\text{t}}_{\text{o}}}$ is the amount of Pu-241 at a time just after discharge of the spent fuel used to obtain said batch, and${\text{}}^{\text{241}} \text{Pu} {\text{}}_{{\text{t}}_{\text{o}} \text{+Δt}}$ is the amount of Pu-241 at the end of said cooling period.

5. A method of adjusting the concentration PuO₂/(PuO₂ + UO₂) of PuO₂ in a uranium and plutonium mixed oxide (MOX) fuel rod according to any one of claims 1 to 4, wherein said adjusting of the concentration PuO₂/(PuO₂ + UO₂) of PuO₂ in said fuel rod in said manufacturing stage is conducted to compensate for accumulation of americium Am-241 produced through β-decay of Pu-241 in said fuel rod during a period Δt₁ between starting manufacturing said fuel rod and loading said fuel rod into a core of a thermal neutron reactor according to the equation:${\text{}}^{\text{241}} \text{Am} {\text{}}_{{\text{t}}_{\text{1}}} {\text{=}}^{\text{241}} {\text{Pu (t}}_{\text{1}} \text{=0) (1-e} {\text{}}^{{\text{-λΔt}}_{\text{1}}} \text{)}$ where λ = 0.693/T_{1/2} and T_{1/2} is the half-life of Pu-241,${\text{}}^{\text{241}} \text{Am} {\text{}}_{{\text{t}}_{\text{1}}}$ is the amount of Am-241 accumulated at a time Δt₁ after reprocessing of the spent fuel used to obtain said batch, and${\text{}}^{\text{241}} {\text{Pu (t}}_{\text{1}} \text{=0)}$ is the amount of Pu-241 in said batch after said reprocessing.

## Patentansprüche

1. Verfahren zur Einstellung der Konzentration PuO₂/<PuO₂ + UO₂) von PuO₂ in einem Brennstab aus einem Mischoxid (MOX) von Uran und Plutonium, der zur Verwendung in einem thermischen Neutronen arbeitenden Reaktor geeignet ist, in welchem Brennstäbe, die durch U-235 angereichertes Uranoxid enthalten, in einer Gitteranordung gebündelt sind, wobei ein Teil der Brennstäbe in der Gitteranordnung mehrere derartige MOX-Brennstäbe enthält, und der Brennstab aus einer Portion von Plutonium hergestellt wird, welches unmittelbar nach der Bestrahlung verbrauchten Brennstoffs zur Bereitstellung der Portion aufweist:
eine Anteilsrate Pu-240/Pu von nicht-spaltbarem Pu-240 gleich C, und
eine Summe an Anteilsraten (Pu-239 + Pu-241)/Pu spaltbarer Isotope von Pu gleich f_{c}' entsprechend C entsprechend einer Beziehung zwischen
der Summe der Anteilsraten (Pu-239 + Pu-241)/Pu spaltbarer Isotope von Pu in der Portion, und
der Anteilsrate Pu-240/Pu nicht-spaltbarem Pu-240 in der Portion,
welche eine monotone Kurve mit negativem Gradienten in einem linearen Diagramm bildet, in welchem aufgetragen sind
die Anteilsrate an nicht-spaltbarem Pu-240 in der Portion auf der Abszisse des Diagramms, und
die Summe der Anteilsraten spaltbarer Isotope von Pu in der Portion auf der Ordinate des Diagramms,
wobei das Verfahren
dadurch **gekennzeichnet** ist, daß die Konzentration von PuO₂/(PuO₂ + UO₂) von PuO₂ in dem Brennstab in einer Herstellungsstufe des Brennstabs Pᵢ' so eingestellt wird, daß sie wird zu 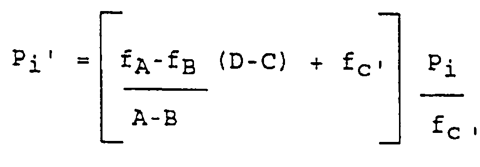 wobei D die Anteilsrate Pu-240/Pu nicht-spaltbarem Pu-240 in der Portion ist, die in einer Auslegungsstufe des Brennstabs eingestellt wird, A eine Anteilsrate Pu-240/Pu an nicht-spaltbarem Pu-240 ist, die kleiner ist als C und D, B eine Anteilsrate Pu-240/Pu nicht-spaltbarem Pu-240 ist, die größer als C und D ist, f_{A} und f_{B} die jeweiligen Summen der Anteilsraten (Pu-239 + Pu-241)/Pu spaltbarer Isotope von Pu entsprechend A und B entsprechend der voranstehenden Beziehung sind, und Pᵢ die Konzentration PuO₂/(PUO₂ + UO₂) von PuO₂ in dem Brennstab ist, die in einer Auslegungsstufe des Brennstabs eingestellt wird, um ein gewünschtes Reaktionsvermögen des Brennstabs hervorzurufen, wodurch sichergestellt wird, daß das gewünschte Reaktionsvermögen des sich ergebenden Brennstabes nach der Herstellungsstufe erzielt wird.

2. Verfahren zur Einstellung der Konzentration PuO₂/<PuO₂ + UO₂) von PuO₂ in einem Brennstab aus einem Mischoxid (MOX) von Uran und Plutonium, der zur Verwendung in einem mit thermischen Neutronen arbeitenden Reaktor geeignet ist, in welchem Brennstäbe, die durch U-235 angereichertes Uranoxid enthalten, in einer Gitteranordnung gebündelt sind, wobei ein Teil der Brennstäbe in der Gitteranordnung mehrere derartige MOX-Brennstäbe enthält, und der Brennstab aus einer Portion von Plutonium hergestellt wird, die unmittelbar nach der Bestrahlung verbrauchten Brennstoffs, der zur Bereitstellung der Portion verwendet wird, aufweist:
eine Anteilsrate Pu-240/Pu an nicht-spaltbarem Pu-240 gleich C₁ kleiner als D oder gleich C₂ größer als D, wobei D die Anteilsrate Pu-240/Pu nicht-spaltbarem Pu-240 in der Portion ist, die in einer Auslegungsstufe des Brennstabs eingestellt wird, und
eine Summe an Anteilsraten (Pu-239 + Pu-241)/Pu spaltbarer Isotope von Pu gleich fci entsprechend C₁ oder gleich f_{c2} entsprechend C2, wobei f_{c1} c₁ entspricht, und f_{c2} C₂ entspricht, entsprechend einer Beziehung zwischen
der Summe der Anteilsraten (Pu-239 + Pu-241)/Pu spaltbarer Isotope von Pu in der Portion, und
der Anteilsrate Pu-240/Pu an nicht-spaltbarem Pu-240 in der Portion,
welche eine monotone Kurve mit negativem Gradienten in einem linearen Diagramm bildet, in welchem aufgetragen sind,
die Anteilsrate an nicht-spaltbarem Pu-240 in der Portion auf der Abszisse des Diagramms, und
die Summe der Anteilsraten spaltbarer Isotope von Pu in der Portion auf der Ordinate des Diagramms,
wobei das Verfahren
dadurch **gekennzeichnet** ist, daß die Konzentration PuO₂/(PUO₂ + UO₂) von PuO₂ in dem Brennstab in einer Herstellungsstufe des Brennstabs Pᵢ' so eingestellt wird, daß sich ergibt${\text{P}}_{\text{i}} {\text{' = P}}_{\text{i}} {\text{(f}}_{\text{C1}} {\text{oder f}}_{\text{C2}} \text{)} \frac{{\text{f}}_{\text{d'}}}{{\text{f}}_{\text{C1}} {\text{' oder f}}_{\text{C2}} \text{'}}$ wobei$\frac{{\text{f}}_{\text{d}} \text{'}}{{\text{f}}_{\text{C1}} {\text{' oder f}}_{\text{C2}} \text{'}} \text{≤} \frac{{\text{f}}_{\text{d}}}{{\text{f}}_{\text{C1}} {\text{oder f}}_{\text{C2}}}$ wobei f_{d} die Summe der Anteilsraten (Pu-239 + Pu-241)/Pu spaltbarer Isotope von Pu entsprechend D entsprechend der Beziehung ist, und Pᵢ die Konzentration PuO₂/(PUO₂ + UO₂) an PuO₂ in dem Brennstab ist, die in der Auslegungsstufe des Brennstabs eingestellt wird, um ein gewünschtes Reaktionsvermögen des Brennstabs hervorzurufen,
wodurch sichergestellt wird, daß nach der Herstellungsstufe das gewünschte Reaktionsvermögen des sich ergebenden Brennstabs erreicht wird.

3. Verfahren zur Einstellung der Konzentration PuO₂/(PUO₂ + UO₂) an PuO₂ in einem Brennstab aus Mischoxid (MOX) aus Uran und Plutonium gemäß Anspruch 1 oder Anspruch 2, wobei die Portion aus Plutonium dadurch erhalten wird, daß eine erste Portion von Plutonium Pₓ, die Isotopenanteilsraten (Pu-239)ₓ: (Pu-240)ₓ: (Pu-241)ₓ aufweist, und eine zweite Portion von Plutonium Py gemischt werden, die Isotopenanteilsraten (Pu-239)_{y}: (Pu-240)_{y}: (Pu-241)_{y} aufweist, und wobei das Mischungsverhältnis Pₓ: (1-Pₓ) von Pₓ bzw. P_{y}, um die Portion aus Plutonium zu erhalten, gegeben ist durch${\text{[(Pu-239)}}_{\text{x}} {\text{+ (Pu-241)}}_{\text{x}} {\text{] P}}_{\text{x}} \text{+} {\text{[(Pu-239)}}_{\text{y}} {\text{+ (Pu-241)}}_{\text{y}} {\text{] (1-P}}_{\text{x}} \text{) =} {\text{(Pu-239)}}_{\text{d}} {\text{+ (Pu-241)}}_{\text{d}}$ wobei (Pu-239)_{d} und (Pu-241)_{d} die Anteilsraten der spaltbaren Isotope von Pu in der Portion sind, die in der Auslegungsstufe eingestellt werden.

4. Verfahren zur Einstellung der Konzentration PuO₂/(PuO₂ + UO₂) von PuO₂ in einem Brennstab aus Mischoxid (MOX) aus Uran und Plutonium nach einem der Ansprüche 1 bis 3, wobei die Einstellung der Konzentration PuO₂/(PuO₂ + UO₂) von PuO₂ in dem Brennstab in der Herstellungsstufe durchgeführt wird, um einen Zerfall von Pu-241 während eines Abkühlzeitraums Δt_{c} der Portion von Plutonium zu kompensieren, die zur Herstellung des Brennstabs verwendet wird, gemäß folgender Gleichung${\text{}}^{\text{241}} {\text{Pu}}_{\text{t0+Δt}} {\text{=}}^{\text{241}} {\text{Pu}}_{\text{t0}} {\text{(1-e}}^{\text{-λΔt}} \text{)}$ wobei λ = 0,693 /T_{1/2} ist, und T_{1/2} die Halbwertzeit von Pu-241 ist,${\text{}}^{\text{241}} {\text{Pu}}_{\text{t0}}$ die Menge an Pu-241 zu einem Zeitpunkt unmittelbar nach dem Ausbringen des verbrauchten Brennstoffs ist, der verwendet wird, um die Portion zu erhalten, und${\text{}}^{\text{241}} {\text{Pu}}_{\text{t0+Δt}}$ die Menge an Pu-241 am Ende des Abkühlzeitraums ist.

5. Verfahren zur Einstellung der Konzentration PuO₂/(PuO₂ + UO₂) von PuO₂ in einem Brennstab aus Mischoxid (MOX) von Uran und Plutonium nach einem der Ansprüche 1 bis 4, wobei die Einstellung der Konzentration PuO₂/(PuO₂ + UO₂) von PuO₂ in dem Brennstab in der Herstellungsstufe durchgeführt wird, um die Ansammlung von Americum Am-241 zu kompensieren, welches über den β-Zerfall von Pu-241 in dem Brennstab während eines Zeitraums Δt₁ zwischen dem Beginn der Herstellung des Brennstabs und dem Einladen des Brennstabs in einen Kern eines mit thermischen Neutronen arbeitenden Reaktors erzeugt wird, gemäß der Gleichung:${\text{}}^{\text{241}} {\text{Am}}_{\text{t1}} {\text{=}}^{\text{241}} {\text{Pu (t}}_{\text{1}} {\text{= 0) (1-e-}}^{\text{λlΔt1}} \text{)}$ wobei λ = 0,693/T_{1/2} ist, und T_{1/2} die Halbwertzeit von Pu-241 ist,${\text{}}^{\text{241}} {\text{Am}}_{\text{t1'}}$ die Menge an Am-241 ist, die sich zu einem Zeitpunkt Δt₁ nach Wiederaufbereitung des verbrauchten Brennstoffs angesammelt hat, der verwendet wird, um die Portion zu erhalten, und${\text{}}^{\text{241}} {\text{Pu (t}}_{\text{1}} \text{= 0)}$ die Menge an Pu-241 in der Portion nach der Wiederaufbereitung ist.

## Revendications

1. Procédé de réglage de la concentration PuO₂/(PuO₂ + UO₂) de PuO₂ dans une barre de combustible en oxyde mixte d'uranium et de plutonium (MOX) convenant pour une utilisation dans un réacteur à neutrons thermiques dans lequel des barres de combustible contenant de l'oxyde d'uranium enrichi en U-235 sont regroupées selon un agencement en réseau, une partie des barres de combustible dans ledit agencement en réseau incluant une pluralité de telles barres de combustible MOX, où ladite barre de combustible est fabriquée à partir d'un lot de plutonium présentant, immédiatement après une irradiation d'un combustible consommé utilisé pour constituer ledit lot :
un taux de contenance Pu-240/Pu de Pu-240 non fissible égal à C, et
une somme de taux de contenance (Pu-239 + Pu-241)/Pu d'isotopes fissibles de Pu égale à f_{c}' correspondant à C conformément à une relation entre
la somme des taux de contenance (Pu-239 + Pu-241)/Pu d'isotopes fissibles de Pu dans ledit lot ; et
le taux de contenance Pu-240/Pu de Pu-240 non fissible dans ledit lot,
qui forme une courbe monotone présentant un gradient négatif sur un graphique linéaire qui représente :
le taux de contenance de Pu-240 non fissible dans ledit lot sur son abscisse ; et
la somme des taux de contenance des isotopes fissibles de Pu dans ledit lot sur son ordonnée,
ledit procédé étant caractérisé par le réglage de la concentration PuO₂/(PuO₂ + UO₂) de PuO₂ dans ladite barre de combustible dans une étape de fabrication de ladite barre de combustible Pᵢ' de telle sorte qu'elle soit égale à : 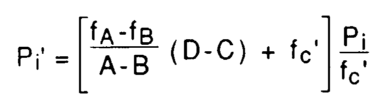 où D est le taux de contenance Pu-240/Pu du Pu-240 non fissible dans ledit lot établi à une étape de conception de ladite barre de combustible, A est un taux de contenance Pu-240/Pu du Pu-240 non fissible inférieur à C et D, B est un taux de contenance Pu-240/Pu du Pu-240 non fissible supérieur à C et D, f_{A} et f_{B} sont les sommes respectives des taux de contenance (Pu-239 + Pu-241)/Pu des isotopes fissibles de Pu correspondant à A et B conformément à ladite relation et Pᵢ est la concentration PuO₂/(PuO₂ + UO₂) de PuO₂ dans ladite barre de combustible établie à une étape de conception de ladite barre de combustible de manière à produire une réactivité souhaitée de ladite barre de combustible,
ce qui assure par conséquent que la réactivité souhaitée de la barre de combustible résultante est obtenue suite à ladite étape de fabrication.

2. Procédé de réglage de la concentration PuO₂/(PuO₂ + UO₂) de PuO₂ dans une barre de combustible en oxyde mixte d'uranium et de plutonium (MOX) convenant pour une utilisation dans un réacteur à neutrons thermiques dans lequel des barres de combustible contenant de l'oxyde d'uranium enrichi en U-235 sont regroupées selon un agencement en réseau, une partie des barres de combustible dans ledit agencement en réseau incluant une pluralité de telles barres de combustible MOX, où ladite barre de combustible est fabriquée à partir d'un lot de plutonium présentant, immédiatement après une irradiation d'un combustible consommé utilisé pour constituer ledit lot :
un taux de contenance Pu-240/Pu de Pu-240 non fissible égal à C₁ inférieur à D ou égal à C2 supérieur à D, où D est le taux de contenance Pu-240/Pu de Pu-240 non fissible dans ledit lot établi au niveau d'une dite étape de conception de ladite barre de combustible ; et
une somme des taux de contenance (Pu-239 + Pu-241)/Pu d'isotopes fissibles de Pu égale à f_{C1} correspondant à C₁ ou égale à f_{C2} correspondant à C₂, f_{C1} correspondant à C₁ et f_{C2} correspondant à C₂ conformément à une relation entre :
la somme des taux de contenance (Pu-239 + Pu-241)/Pu d'isotopes fissibles de Pu dans ledit lot ; et
le taux de contenance Pu-240/Pu de Pu-240 non fissible dans ledit lot,
qui forme une courbe monotone présentant un gradient négatif sur un graphique linéaire qui représente :
le taux de contenance de Pu-240 non fissible dans ledit lot sur son abscisse ; et
la somme des taux de contenance des isotopes fissibles de Pu dans ledit lot sur son ordonnée,
ledit procédé étant caractérisé par le réglage de la concentration PuO₂/(PuO₂ + UO₂) de PuO₂ dans ladite barre de combustible au niveau d'une étape de fabrication de ladite barre de combustible Pᵢ' de telle sorte qu'elle soit égale à :${\text{P}}_{\text{i}} {\text{' = Pi (f}}_{\text{C1}} {\text{ou f}}_{\text{C2}} \text{) (} \frac{{\text{f}}_{\text{d}} \text{'}}{{\text{f}}_{\text{C1}} {\text{' ou f}}_{\text{C2}} \text{'}} \text{),}$ où$\frac{{\text{f}}_{\text{d}} \text{'}}{{\text{f}}_{\text{C1}} {\text{' ou f}}_{\text{C2}} \text{'}} \text{≤} \frac{{\text{f}}_{\text{d}}}{{\text{f}}_{\text{C1}} {\text{ou f}}_{\text{C2}} \text{'}}$ où f_{d} est la somme des taux de contenance (Pu-239 + Pu-241)/Pu d'isotopes fissibles de Pu correspondant à D conformément à ladite relation et Pᵢ est la concentration PuO₂/(PuO₂ + UO₂) de PuO₂ dans ladite barre de combustible établie au niveau de ladite étape de conception de ladite barre de combustible afin de produire une réactivité souhaitée de ladite barre de combustible,
ce qui assure par conséquent que la réactivité souhaitée de la barre de combustible résultante est obtenue suite à ladite étape de fabrication.

3. Procédé de réglage de la concentration PuO₂/(PuO₂ + UO₂) de PuO₂ dans une barre de combustible en oxyde mixte d'uranium et de plutonium (MOX) selon la revendication 1 ou 2, dans lequel ledit lot de plutonium est obtenu en mélangeant un premier lot de plutonium Pₓ présentant des taux de contenance d'isotopes (Pu-239)ₓ : (Pu-240)ₓ : (Pu-241)ₓ et un second lot de plutonium P_{y} présentant des taux de contenance d'isotopes (Pu-239)y : (Pu-240)y : (Pu-241)y, et dans lequel le rapport de mélange Pₓ : (1-Pₓ) de Pₓ et P_{y} respectivement pour obtenir ledit lot de plutonium est donné par :${\text{[(Pu-239)}}_{\text{x}} {\text{+ (Pu-241)}}_{\text{x}} {\text{] P}}_{\text{x}} {\text{+ [(Pu-239)}}_{\text{y}} {\text{+ (Pu-241)}}_{\text{y}} {\text{] (1-P}}_{\text{x}} {\text{) = (Pu-239)}}_{\text{d}} {\text{+ (Pu-241)}}_{\text{d}} \text{,}$ où (Pu-239)_{d} et (Pu-241)_{d} sont les taux de contenance des isotopes fissibles du Pu dans ledit lot établis au niveau de ladite étape de conception.

4. Procédé de réglage de la concentration PuO₂/(PuO₂ + UO₂) de PuO₂ dans une barre de combustible en oxyde mixte d'uranium et de plutonium (MOX) selon l'une quelconque des revendications 1 à 3, dans lequel ledit réglage de la concentration PuO₂/(PuO₂ + UO₂) du PuO₂ dans ladite barre de combustible au niveau de ladite étape de fabrication est mis en oeuvre afin de compenser une désintégration du Pu-241 pendant une période de refroidissement Δt_{c} dudit lot de plutonium utilisé pour fabriquer ladite barre de combustible conformément à l'équation :${\text{}}^{\text{241}} \text{Pu} {\text{}}_{{\text{t}}_{\text{o}} \text{+Δt}} {\text{=}}^{\text{241}} \text{Pu} {\text{}}_{{\text{t}}_{\text{o}}} {\text{(1-e}}^{\text{-λΔt}} \text{)}$ où λ = 0,693/T_{1/2} et T_{1/2} est la demi-vie du Pu-241,${\text{}}^{\text{241}} \text{Pu} {\text{}}_{{\text{t}}_{\text{o}}}$ est la quantité de Pu-241 à un instant juste après la décharge du combustible consommé utilisé pour obtenir ledit lot ; et${\text{}}^{\text{241}} \text{Pu} {\text{}}_{{\text{t}}_{\text{o}} \text{+Δt}}$ est la quantité de Pu-241 à la fin de ladite période de refroidissement.

5. Procédé de réglage de la concentration PuO₂/(PuO₂ + UO₂) de PuO₂ dans une barre de combustible en oxyde mixte d'uranium et de plutonium (MOX) selon l'une quelconque des revendications 1 à 4, dans lequel ledit réglage de la concentration PuO₂/(PuO₂ + UO₂) du PuO₂ dans ladite barre de combustible au niveau de ladite étape de fabrication est mis en oeuvre afin de compenser l'accumulation d'américium Am-241 produit par l'intermédiaire d'une désintégration β du Pu-241 dans ladite barre de combustible pendant une période Δt₁ entre le début de la fabrication de ladite barre de combustible et le chargement de ladite barre de combustible dans un coeur d'un réacteur à neutrons thermiques conformément à l'équation :${\text{}}^{\text{241}} \text{Am} {\text{}}_{{\text{t}}_{\text{1}}} {\text{=}}^{\text{241}} {\text{Pu (t}}_{\text{1}} \text{=0) (1-e} {\text{}}^{{\text{-λΔt}}_{\text{1}}} \text{)}$ où λ = 0,693 T_{1/2} et T_{1/2} est la demi-vie du Pu-241,${\text{}}^{\text{241}} \text{Am} {\text{}}_{{\text{t}}_{\text{1}}}$ est la quantité d'Am-241 accumulée à un instant Δt₁ après le retraitement du combustible consommé utilisé pour obtenir ledit lot ; et${\text{}}^{\text{241}} {\text{Pu (t}}_{\text{1}} \text{=0)}$ est la quantité de Pu-241 dans ledit lot après ledit retraitement.
